**Europäisches Patentamt**

**European Patent Office**

**Office européen des brevets**

(19)

(11) Veröffentlichungsnummer: **0 240 847 B1**

(12) **EUROPÄISCHE PATENTSCHRIFT**

(45) Veröffentlichungstag der Patentschrift: **22.05.91**

(51) Int. Cl.5: **F16H 57/08, F16D 41/06**

(21) Anmeldenummer: **87104417.8**

(22) Anmeldetag: **25.03.87**

Teilanmeldung 89120251.7 eingereicht am 25/03/87.

(54) **Rollen- oder Klemmkörper-Freilauf, insbesondere für Automatik-Getriebe für Kraftfahrzeuge.**

(30) Priorität: **10.04.86 DE 3612046**

(43) Veröffentlichungstag der Anmeldung:
**14.10.87 Patentblatt 87/42**

(45) Bekanntmachung des Hinweises auf die Patenterteilung:
**22.05.91 Patentblatt 91/21**

(84) Benannte Vertragsstaaten:
**DE FR GB SE**

(56) Entgegenhaltungen:
**EP-A- 237 743**
**DE-B- 1 132 390**
**FR-A- 2 112 652**
**US-A- 3 613 481**

(73) Patentinhaber: **FORD-WERKE AKTIENGESELL-SCHAFT**
**Werk Köln-Niehl Henry-Ford-Strasse Postfach 60 40 02**
**W-5000 Köln 60(DE)DE SE**

Patentinhaber: **FORD MOTOR COMPANY LIMITED**
**Eagle Way**
**Brentwood Essex CM13 3BW(GB)GB**

Patentinhaber: **FORD FRANCE SOCIETE ANONYME**
**344 Avenue Napoléon Bonaparte B.P. 307**
**F-92506 Rueil Malmaison Cedex(FR)FR**

(72) Erfinder: **Premiski, Vladimir**
**Fliederstrasse 23**
**W-5358 BAM-Willerscheid(DE)**
Erfinder: **Höhnel, Rainer**
**Hahnenstrasse 41**
**W-5024 Pulheim 3(DE)**
Erfinder: **Premiski, Claudia**
**Fliederstrasse 23**
**W-5358 BAM-Willerscheid(DE)**

(74) Vertreter: **Messulam, Alec Moses**
**A. Messulam & Co. 24 Broadway**
**Leigh on Sea Essex SS9 1BN(GB)**

## Beschreibung

Die Erfindung bezieht sich auf einen Rollen- oder Klemmkörper-Freilauf, insbesondere für Automatik-Getriebe für Kraftfahrzeuge, der im Oberbegriff des Patentanspruchs 1 erläuterten Art.

Aus der US-A- 3 613 481 ist ein Rollen- oder Klemmkörper-Freilauf der im Oberbegriff des Patentanspruchs erläuterten Art bekannt.

Die beiden miteinander zusammenwirkenden inneren und äußeren Laufringe sind hierbei über seitlich von den Klemmrollen oder Klemmkörpern angeordnete Stützringe mit C-förmigen Querschnitten konzentrisch zueinander abgestützt und gelagert.

Bei der bekannten Anordnung ist der Außenlaufring drehfest am Getriebegehäuse angeordnet und der Innenlaufring ist treibend mit dem zweiten Planetenradträger eines Simpson-Satzes verbunden. Die Verbindung besteht hierbei aus einem trommelförmigen Bauteil, an dem außen eine Bremseinrichtung eingreift und das über eine radiale Nabe mit dem Innenlaufring verbunden ist. Der Innenlaufring ist hierbei auf einem Teil der Abtriebswelle des Getriebes abgestützt und gelagert.

Bei dieser bekannten Anordnung ist das trommelförmige Bauteil durch seine radiale Nabe verhältnismäßig aufwendig ausgebildet.

Aus der DE-A- 34 17 703 ist ein weiterer Rollen- oder Klemmkörper-Freilauf ähnlich der im Oberbegriff des Patentanspruchs 1 genannten Art bekannt, wobei der Innenlaufring am Getriebegehäuse festgelegt ist, während der Außenlaufring treibend mit dem zweiten Planetenradträger des Simpson-Satzes verbunden ist. Die Verbindung erfolgt wieder über ein trommelförmiges Bauteil, an dem eine Bremseinrichtung eingreift und das über eine radiale Nabe auf einen verlängerten Teil des Innenlaufringes abgestützt ist.

Auch bei diese bekannte Anordnung ist das trommelförmige Bauteil verhältnismäßig aufwendig gestaltet ist.

Aus der älteren, nachveröffentlichten EP-A-237 743 ist aus der Beschreibungsseite 4 in Verbindung mit den Figuren 2 und 4 ein Hinweis darauf zu entnehmen, daß zu beiden Seiten des Rollenfreilaufs C-förmige Stützringe angeordnet sind, die über Schließringe verstärkt sind.

Details der Ausführung und Befestigung dieser Stützringe sind dieser älteren Anmeldung jedoch nicht zu entnehmen.

Die Aufgabe der Erfindung ist es, einen Rollen- oder Klemmkörper-Freilauf der im Oberbegriff des Patentanspruchs 1 erläuterten Art derart zu gestalten, daß seine Verbindung mit dem zweiten Planetenradträger eines Simpson-Satzes und seine Anordnung und Abstützung im Getriebegehäuse mit möglichst geringem Bau-und Montageaufwand erfolgen kann.

Gemäß der Erfindung wird diese Aufgabe gelöst, indem ein Rollen- oder Klemmkörper-Freilauf der im Oberbegriff des Patentanspruchs 1 erläuterten Art die im Kennzeichenteil des Patentanspruchs 1 aufgezeigten Merkmale aufweist.

In den Ansprüchen 2 bis 3 sind weitere zweckmäßige Maßnahmen der Erfindung erläutert.

Dadurch, daß das trommelförmige Bauteile als ein einstückiges Fließpreßteil ausgebildet ist, das gleichzeitig den umlaufenden Außenring des Rollen-oder Klemmkörper-Freilaufes bildet und daß die Stützringe als Tiefziehteile aus mit Bronze plattiertem Stahlblech ausgebildet sind und die offene Seite der Stützringe über Schließringe verschlossen und an am Innen-und Außenumfang verteilten Stellen durch keilförmige Einprägungen mit den Stützringen fest verbunden sind, wird eine günstige Abstützung und Lagerung des mit dem zweiten Planetenradträger des Simpson-Satzes verbundenen trommelförmigen Bauteiles ermöglicht, wobei durch die beidseitige hochbelastbare Abstützung mittels der Stützringe auf die Anordnung einer aufwendigen radialen Nabe für das trommelförmige Bauteil verzichtet werden kann.

Dadurch, daß die Schließringe für die C-förmigen Stützringe je nach Ausführung des Käfigs des Rollen- oder Klemmkörper-Freilaufes aus mit Bronze plattiertem Stahlblech oder nur aus Stahlblech bestehen können, kann eine weitere Vereinfachung und Verbilligung der Anordnung erzielt werden.

Die Erfindung wird anhand eines in der beiliegenden Zeichnung gezeigten Ausführungsbeispieles näher erläutert.

Es zeigt:

Fig. 1   einen vertikalen Teilschnitt durch den Bereich eines Simpson-Satzes eines Automatischen Getriebes mit einem Rollen- oder Klemmkörper-Freilauf gemäß der Erfindung;

Fig. 2   eine vergrößerte Darstellung der in Fig. 1 im Kreis II gezeigten Anordnung der C-förmigen Stützringe und

Fig. 3   eine Teilansicht der Fig. 2 in Richtung des Pfeiles III.

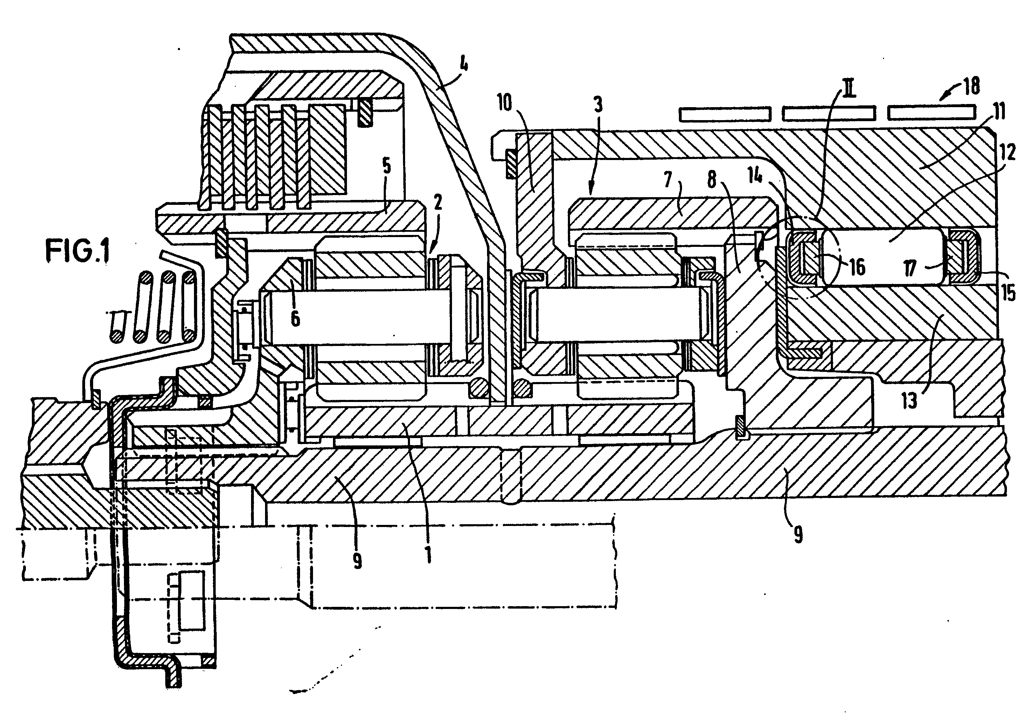

In Fig. 1 ist der in einem Automatik-Getriebe für Kraftfahrzeuge als Teil eines Planetenradgetriebes häufig verwendete Simpson-Satz gezeigt.

Ein solcher Simpson-Satz besteht aus zwei über ein gemeinsames Sonnenrad 1 miteinander gekoppelten Planetenradsätzen 2 und 3, wobei das Antriebsmoment einerseits über eine Antriebsglokke 4 von einer Vorwärtsgangkupplung (nicht gezeigt) ober über das Ringrad 5 des ersten Planetenradsatzes von einer Direktgangkupplung (nicht gezeigt) eingeleitet werden kann. Hierbei sind der Planetenradträger 6 des ersten Planetenradsatzes 2 sowie das Ringrad 7 des zweiten Planetenradsatzes 3 unmittelbar bzw. über ein Nabenteil 8 treibend mit der Abtriebswelle 9 des Getriebes verbunden.

Der Planetenradträger 10 des zweiten Planetenradsatzes 3 ist hierbei treibend mit einem trommelförmigen Bauteil 11 verbunden, das als ein einstückiges Fließpreßteil ausgebildet ist und das gleichzeitig den umlaufenden Außenlaufring eines Rollen- oder Klemmkörper-Freilaufes 12 bildet, dessen Innenlaufring 13 im Getriebegehäuse (nur angedeutet) festgelegt ist.

Das trommelförmige Bauteil 11 bildet hierbei unmittelbar die Bremstrommel für eine Bandbremse 18, mittels der der Planetenradträger 10 als Reaktionselement festlegbar ist.

Gemäß der Erfindung ist eine sichere konzentrische Abstützung und Lagerung des trommelförmigen Bauteiles 11 gegenüber dem Innenlaufring 13 durch seitlich des Rollen- oder Klemmkörper-Freilaufs 12 angeordnete Stützringe 14 und 15 sichergestellt, die einen C-förmigen Querschnitt aufweisen, der durch Schließringe 16 und 17 geschlossen wird.

Durch die bei 18 angedeutete Bremseinrichtung in Form einer Bandbremse kann der Planetenradträger 10 des zweiten Planetenradsatzes 3 gegen eine Drehung in beiden Richtung festgelegt werden und hierdurch treten an den Stützringen 14 und 15 erhebliche Abstützkräfte auf.

Bisher hatte man diese erheblichen Abstützkräfte durch Stützringe aufgenommen, die aus Bronze-Vollmaterial bestanden, was verhältnismäßig teuer war. Die Anordnung von billiger herzustellenden C-förmigen Stützringen war bei der vorliegenden Anordnung nicht möglich, da die seitlich offenen Stützringe eine so hohe Belastung nicht aufnehmen konnten. Erst durch die gemäß der Erfindung vorgesehenen Schließringe konnten die in der Herstellung wesentlich billigeren C-förmigen Stützringe an dieser Lagerstelle zum Einsatz kommen.

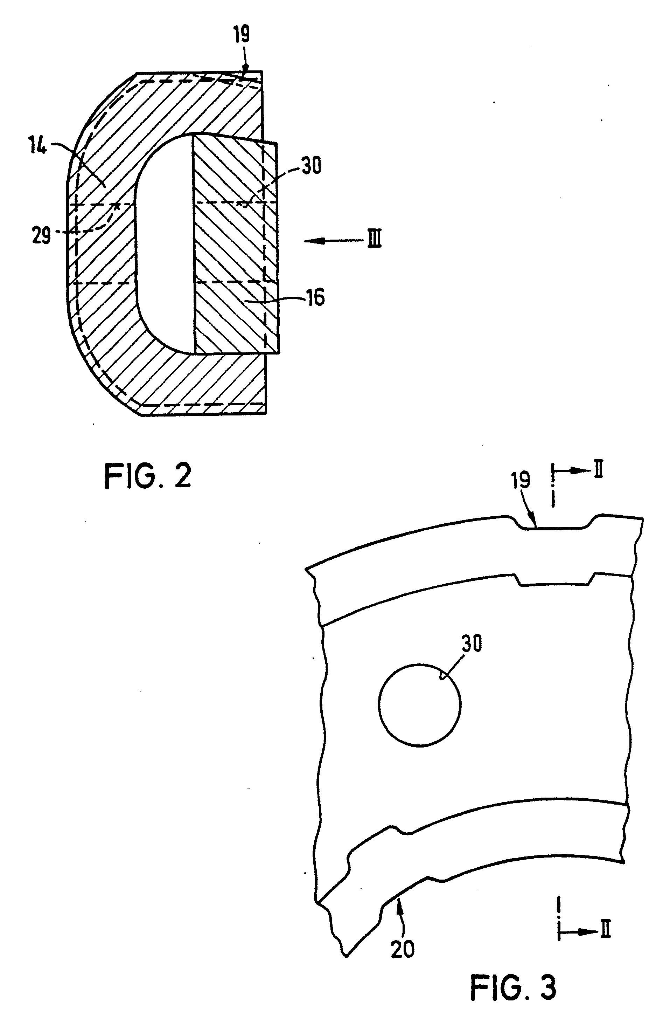

Wie aus den Fig. 2 und 3 zu ersehen ist, besteht ein C-förmiger Stützring 14 aus mit Bronze plattiertem Stahlblech und kann als Tiefziehteil mit der erforderlichen Genauigkeit hergestellt werden. Ein entsprechend angepaßter Schließring 16, gleichfalls aus mit Bronze plattiertem Stahlblech, wird in den offenen Bereich des C-förmigen Stützringes 14 eingesetzt und sowohl am Innen- und am Außenumfang an verteilten Stellen durch radiale Einprägungen 19 bzw. 20 sicher mit dem Stützring 14 verbunden.

Je nach dem ob der Käfig des Rollen- oder Klemmkörper-Freilaufs 12 aus Stahlblech oder aus Kunststoff besteht, können die Schließringe 16 bzw. 17 im ersten Fall aus mit Bronze plattiertem Stahlblech bestehen oder im zweiten Fall nur aus Stahlblech bestehen, da eine Reibpaarung Kunststoff auf Stahl für die auftretenden Axialbelastungen ausreichend ist.

Bei den Ausführungen der Stützringe 14 und 15 und der Schließringe 16 und 17 sind in den vertikalen Wandungen radial verteilt Bohrungen 29 und 30 vorgesehen, die für eine ausreichende Schmierölzufuhr ins Innere des Rollen- oder Klemmkörper-Freilaufes sorgen.

## Ansprüche

1. Rollen- oder Klemmkörper-Freilauf, insbesondere für Automatik-Getriebe für Kraftfahrzeuge, mit einem in einem Getriebegehäuse festgelegten Laufring und einem umlaufenden Laufring, der über ein trommelförmiges Bauteil mit einem Element eines Planetenradsatzes verbunden ist und mit zwischen den beiden Laufringen angeordneten Klemmrollen oder Klemmkörpern und seitlich davon angeordneten Stützringen mit C-förmigen Querschnitt, **dadurch gekennzeichnet, daß**

   - das trommelförmige Bauteil (11) als ein einstückiges Fließpreßteil ausgebildet ist, das gleichzeitig den Außenlaufring des Rollen- oder Klemmkörperfreilaufs bildet und daß,
   - die Stützringe (14 und 15) als Tiefziehteile aus mit Bronze plattiertem Stahlblech ausgebildet und die offenen Seiten der Stützringe (14 und 15) über Schließringe (16 und 17) verschlossen sind, die am Innen- und Außenumfang an verteilten Stellen durch keilförmige Einprägungen (19 bzw. 20) mit den Stützringen (14 und 15) fest verbunden sind.

2. Rollen-oder Klemmkörper-Freilauf nach Anspruch 1, **dadurch gekennzeichnet, daß**

   - die Schließringe (16 und 17) aus mit Bronze plattiertem Stahlblech bestehen, wenn der Käfig des Klemmrollen- oder Klemmkörper-Freilaufs (12) aus Stahl besteht.

3. Rollen- oder Klemmkörper-Freilauf nach Anspruch 1, **dadurch gekennzeichnet, daß**

   - die Schließringe (16 und 17) aus Stahlblech bestehen, wenn der Käfig des Klemmrollen- oder Klemmkörper-Freilaufs aus Kunststoff besteht.

## Claims

1. A roller or clamped-member freewheel, in particular for automatic transmissions for motor vehicles, having a bearing race fixed in a gearbox casing, and a rotating bearing race connected by way of a drum-shaped component to one element of a planetary gear system, and with clamped rollers or clamped members arranged between the two bearing races and with support rings of C-shaped cross-section arranged laterally thereof, characterised in that the drum-shaped component (11) is constructed as a one-piece extrusion-moulded component which at the same time forms the outer bearing race of the roller or clamped-member freewheel, and the support rings (14 and 15) are constructed as deep-drawn components from bronze-plated steel sheet and the open sides of the support rings (14 and 15) are closed by way of retaining rings (16 and 17) which are securely joined to the support rings (14 and 15) by wedge-shaped indentations (19 and 20) respectively at points distributed on the inner and outer periphery.

2. A roller or clamped-member freewheel according to Claim 1, characterised in that the retaining rings (16 and 17) consist of bronze-plated steel sheet when the cage of the clamped-roller or clamped-member freewheel (12) consists of steel.

3. A roller or clamped-member freewheel according to Claim 1, characterised in that the retaining rings (16 and 17) consist of steel sheet when the cage of the clamped-roller or clamped-member freewheel (12) consists of plastics material.

**Revendications**

1. Roue libre à rouleaux ou à corps de coincement, notamment pour boîtes de vitesses automatiques de véhicules automobiles, comprenant une bague de roulement verrouillée dans un carter de transmission, et une bague circonférentielle de roulement reliée, par l'intermédiaire d'une partie structurelle en forme de tambour, à un élément d'un jeu de pignons satellites, ainsi que des rouleaux de coincement ou des corps de coincement interposés entre les deux bagues de roulement, et sur le côté desquels sont disposées des bagues de soutien de section transversale configurée en C, caractérisée par le fait que
   - la partie structurelle (11) en forme de tambour est réalisée sous la forme d'une pièce monobloc venue d'extrusion, qui constitue simultanément la bague de roulement externe de la roue libre à rouleaux ou à corps de coincement ; et par le fait que
   - les bagues de soutien (14 et 15) sont réalisées en tant que pièces venues d'emboutissage profond en de la tôle d'acier à placage de bronze, et les côtés ouverts des bagues de soutien (14 et 15) sont fermés par l'intermédiaire de bagues d'obturation (16 et 17) qui sont reliées rigidement aux bagues de soutien (14 et 15), en des zones réparties sur les périphéries interne et externe, par des empreintes rentrantes cunéiformes (19, respectivement 20).

2. Roue libre à rouleaux ou à corps de coincement, selon la revendication 1, caractérisée par le fait que
   - les bagues d'obturation (16 et 17) consistent en de la tôle d'acier à placage de bronze lorsque la cage de la roue libre (12) à rouleaux de coincement ou à corps de coincement consiste en de l'acier.

3. Roue libre à rouleaux ou à corps de coincement, selon la revendication 1, caractérisée par le fait que
   - les bagues d'obturation (16 et 17) consistent en de la tôle d'acier lorsque la cage de la roue libre à rouleaux de coincement ou à corps de coincement consiste en une matière plastique.

FIG.1

FIG. 2

FIG. 3